**Europäisches Patentamt**

**European Patent Office**

**Office européen des brevets**

(19)

(11) Veröffentlichungsnummer: **0 019 138**
**B1**

(12) **EUROPÄISCHE PATENTSCHRIFT**

(45) Veröffentlichungstag der Patentschrift: **09.11.88**

(51) Int. Cl.⁴: **H 02 P 5/40**

(21) Anmeldenummer: **80102301.1**

(22) Anmeldetag: **28.04.80**

(54) Lastzustandsregelung einer umrichtergespeisten Asynchronmaschine.

(30) Priorität: 16.05.79 DE 2919852

(43) Veröffentlichungstag der Anmeldung:
26.11.80 Patentblatt 80/24

(45) Bekanntmachung des Hinweises auf die
Patenterteilung:
09.11.88 Patentblatt 88/45

(84) Benannte Vertragsstaaten:
AT BE CH DE FR GB IT LI NL SE

(56) Entgegenhaltungen:
DE-A-2 348 157
FR-A-2 193 285
STEUERUNGSTECHNIK, Band 4, Nr. 10,
Oktober 1971, MAINZ (DE). H. GADE:
"Regelung von stromrichtergespeisten Gleich-
und Drehstromantrieben", Seiten 301 bis 307
SIEMENS-ZEITSCHRIFT, Band 45, Nr. 4, 1971,
ERLANGEN (DE). E. HELD et al.: "SIMOVERT-
Einmotorantrieb für Spinnextruder", Seiten 195
bis 197
Buch von D. Ernst und D. Ströle
"Industrieelektronik" 1973, S. 204,

(73) Patentinhaber: Siemens Aktiengesellschaft
Berlin und München
Wittelsbacherplatz 2
D-8000 München 2 (DE)

(72) Erfinder: Blaschke, Felix, Dr.
Steinforststrasse 19
D-8520 Erlangen (DE)
Erfinder: Reng, Leonhard, Dipl.-Ing.
Georg-Krauss-Strasse 8
D-8520 Erlangen (DE)

EP 0019138 B1

## Beschreibung

Die Erfindung betrifft ein Verfahren und eine Vorrichtung zur Lastzustandsregelung einer umrichtergespeisten Drehfeldmaschine.

Das Drehmoment einer Drehfeldmaschine ist als Vektorprodukt aus einem Ständer-Stromvektor $i$ und einem Flußvektor $\psi$ gleich dem skalaren Produkt $i_{\psi 2} \cdot \psi$ aus der zum Flußvektor senkrechten Komponente $i_{\psi 2}$ ("Wirkstrom") des Stromvektors und dem "Fluß" $\psi$ (Betrag des Flußvektors), der im stationären Fall proportional zur zum Flußvektor parallelen Komponent $i_{\psi 1}$ ("Magnetisierungsstrom") ist. Der Strombetrag $i$ setzt sich daher gemäß der Funktion

$$i=\sqrt{i_{\psi 1}^2+i_{\psi 2}^2}$$

aus dem Wirkstrom und dem Magnetiserungsstrom zusammen.

Gemäß dieser vektoriellen Betrachtungsweise ist in "Steuerungstechnik" 4 (1971), Seite 301—307, Bild 6b ein drehzahlgeregelter Asynchronmotor mit folgenden Merkmalen angegeben:

α) ein Drehzahlregler bildet aus der Regelabweichung zwischen einem vorgegebenen Drehzahl-Sollwert und dem Ausgangssignal einer Tachomaschine eine einem Soll-Wirkstrom entsprechende Stromsteuergröße;

β) ein Funktionsgeber errechnet aus diesem Sollwert und einem einem vorgegebenen Fluß entsprechenden Soll-Magnetisierungsstrom den Sollwert für die Amplitude des Ständerstromes, die über einen Strombetragsregler den netzgeführten Stromrichter eines an ein Drehstromnetz angeschlossenen, eine Asynchronmaschine speisenden Umrichters regelt, der einen Gleichstromzwischenkreis und einen selbstgeführten Stromrichter enthält;

γ) ein Istwert-Rechner berechnet aus Istwerten von Ständerstrom und Ständerspannung das Drehmoment als eine den Lastzustand beschreibende Größe;

δ) ein vom Soll-Drehmoment als Lastzustandsgrößen-Sollwert und vom Lastzustandsgrößen-Istwert beaufschlagter Lastzustandsregler liefert eine Frequenzsteuergröße, mit der der selbstgeführte Stromrichter gesteuert wird.

Im stationären Fall unterscheidet sich die Mashinen-Drehzahl von der Ständerstrom-Frequenz um den sogenannten "Schlupf", und die Maschine benötigt zum Erzeugen des Drehmoments neben einem bestimmten Fluß einen Läuferstrom, der dem Schlupf proportional ist. Anstelle z.B. durch Hall-Sonden den Fluß und den Schlupf zu messen, errechnet der bekannte Istwertrechner Fluß und Drehmoment aus Spannung und Strom des Ständers. Der Lastzustandsregler erzeugt ein einem höheren Soll-Moment entsprechendes Ist-Drehmoment durch gleichzeitige Erhöhung des Strombetrages und der Ständerfrequenz, also des Schlupfes. Bei Überschreitung eines Schlupf-Maximalwertes sinkt allerdings das Drehmoment in der Maschine ab; die Maschine verringert daher z.B. bei großen Laststößen und entsprechend absinkender Ist-Drehzahl über eine entsprechende Frequenzerhöhung das Istdrehmoment, so daß die Drehzahl noch weiter absinken und die Maschine zum Stillstand kommen kann: die Maschine "kippt".

In "Siemens-Zeitschrift" 45, (1971), Seite 195—197 ist eine ähnliche Vorrichtung angegeben, die ebenfalls einen Istwert-Rechner zur Bildung des Ist-Momentes enthält. Allerdings wird für die Lastzustandsgröße zur Erhöhung der Kipp-Sicherheit einerseits eine Begrenzung und Linearisierung vorgenommen, andererseits des Ausgangssignal des Lastzustandsreglers als Schlupf-Sollwert einem unterlagerten Regler zugeführt, dessen Ausgangssignal gleichzeitig die Frequenz des Ständerstroms steuert und nach Subtraktion der gemessenen Drehzahl als Ist-Schlupf auf den Reglereingang rückgeführt ist.

Die mittels einer Tachomaschine gemessene Drehzahl ist aber nicht auf einen Drehzahlregler rückgeführt. Vielmehr verwendet der dort beschriebene Extruder-Antrieb einen Ständerfrequenzregler, dessen Sollwert von einem der Prozeß-Technologie entsprechenden Druckregler geliefert wird und direkt mit dem die Stromfrequenz steuernden Schlupffrequenz-Reglerausgang verglichen wird, um gleichzeitig den Lastzustandsgrößen-Sollwert und die Stromsteuergröße zu bilden.

Diese bekannte Vorrichtung arbeitet demnach mit folgenden Verfahrensschritten:

α') aus der Regelabweichung zwischen einen vorgegebenen Sollwert für die Ständerstrom-Frequenz und einem von einem erfaßten Drehzahl - Istwert abhängigen Istwert der Ständerstrom frequenz wird eine einem Solldrehmoment und damit auch einem Soll-Wirkstrom entsprechende Stromsteuergröße gebildet;

β') die Amplitude des Umrichter-Ausgangsstromes wird entsprechend der Amplitude eines Soll-Ständerstroms geregelt, der aus dem Soll-Wirkstrom und einem einem vorgegebenen Fluß entsprechenden Soll-Magnetisierungsstrom gebildet ist;

γ') aus Istwerten von Ständerstrom und Ständerspannung wird unter Berechnung des Flusses das Drehmoment als Lastzustandsgröße gebildet;

δ') die Frequenz des Umrichter-Ausgangsstromes wird mit einer Frequenzsteuergröße gesteuert, die aus der Regelabweichung des Drehmoment-Istwertes und eines aus der Stromsteuergröße gebildeten Drehmoment-Sollwertes der Lastzustandsgröße mittels einer unterlagerten Schlupfregelung gebildet wird, deren Schlupffrequenz-Istwert von der rückgeführten Frequenzsteuergröße abzüglich des erfaßten Drehzahl-Istwertes vorgegeben wird, und

ε') als vom erfaßten Drehzahl-Istwert abhängiger Istwert wird die Frequenzsteuergröße verwendet.

Nach dem dieser Regelung zugrunde liegenden Regelkonzept wird letztlich durch einen Stromregelkreis der Betrag $i$ des Ständerstromvektors $i$

vorgegeben und durch die Frequenzsteuerung wird der Ständerstromvektor selbst dem rotierenden Hauptflußvektor $\psi$ so nachgeführt, daß die zum Flußvektor parallele Ständerstromkomponente den konstant zu haltenden Flußbetrag und die dazu senkrechte Ständerstromkomponente das vorgegebene Drehmoment einregeln. Die Abhängigkeit des Drehmoments vom Winkel zwischen Hauptflußvektor und Ständerstromvektor (Lastwinkel) zeigt jedoch bei 45° ein Maximum. Bei Lastwinkel über 45° führt daher eine Belastung an der Welle der Asynchronmaschine, die über dem Drehmoment-Istwert liegt und zu einer Verlangsamung der Drehzahl führt, zur Abgabe eines noch geringeren Drehmoments, also letzlich zum Stillstand der Maschine ("Kippen"). Zur Kippsicherung bei Lastwinkeln über 45° könnte daher in der bekannten Anordnung neben dem unterlagerten Schlupffrequenz-Regelkreis auch die Linearisierung der Kennlinie im Istwertrechner dienen, die jedoch nicht näher ausgeführt ist. Außerdem ist bei diesem Regelkonzept ein Feldschwäch-Betrieb nicht angegeben und nur unter zusätzlichem Aufwand möglich.

Im Buch "Industrie-Elektronik", Berlin/Heidelberg/New York, 1973, von D. Ernst und D. Ströle ist auf Seite 204, Bild 9.43 eine ähnliche Vorrichtung angegeben, deren Konzept aber auf einer linearisierten Lastzustandsgröße beruht, wobei der Istwert-Rechner anstelle des elektrischen Moments M den Quotient $M/\psi^2$ errechnet, da er die Temperaturahängigkeit des Läuferwiderstandes bereits weitgehend berücksichtigt und zu einem stabilen Betrieb führt.

Der entsprechende Sollwert ist am Ausgang eines Drehzahlregelers abgegriffen, wodurch eine Rückführung der Frequenzsteuergröße entbehrlich wird. Ebenso ist kein dem Lastzustandsgrößen-Regeler unterlagerter Schlupfregler vorgesehen, vielmehr ist der von einer Tachomaschine erfaßte Drehzahl-Istwert direkt dem Ausgang des Lastzustandsgrößenreglers aufgeschaltet, der den Schlupf-Sollwert liefert.

Alle erwähnten Vorrichtungen und Verfahren kommen nicht ohne Drehzahlerfassung aus.

Der Erfindung liegt demgegenüber die Aufgabe zugrunde, unter Verwendung eines geeigneten Regelkonzeptes einerseits auch bei Lastwinkeln über 45° eine Sicherheit gegenüber Kippen zu erreichen, andererseits ohne eine aufwendige Tachomaschine zur Drehzahlerfassung auszukommen. Bei der Erfindung können entsprechend den jeweiligen Anwendungen durch einfache Eingriffe noch weitere Verbesserungen erreicht werden. So kann z.B. ein Betrieb mit Feldschwächung leicht durchgeführt werden und Maßnahmen zur Stabilisierung (Dämpfung von Schwingungen) und/oder zur Kippsicherung bei Lastwinkeln bis nahe 90° erfordern trotz Verzicht auf eine Drehzahlerfassung nur geringfügigen Mehraufwand. Dies ist z.B. für Lüfter, Kreiselpumpen, Rührwerke oder Zentrifugen vorteilhaft.

Dies wird gemäß der Erfingung durch ein Verfahren mit den Merkmalen des Anspruchs 1 bzw. durch eine Vorrichtung mit den Merkmalen des Anspruchs 4 gelöst.

In Figur 5 sind der (bezüglich einer ständerbezogenen Achse $\underline{a}_1$ rotierende) Hauptflußvektor $\psi$ und die Komponenten $i_{\psi1}$ und $i_{\psi2}$ des (ebenfalls rotierenden) Ständerstromvektors dargestellt. Für den stationären Fall, bei dem der Flußbetrag $\psi$ konstant ist und der Lastwinkel $\varepsilon$ den Stabilitäts-Grenzwert von 90° nicht erreicht, bedeutet das verwendete Regelkonzept, daß die Lastzustandsgröße $W = i_{\psi2}/\psi$ dem Tangens des Lastwinkels entspricht. Wird der Sollwert $W^*$ als Quotient entsprechender Sollwerte für den Wirkstrom und den Fluß gebildet, so können Wirkstrom und Fluß getrennt voneinander beeinflußt werden. Dies ermöglicht einen Betrieb mit Feldschwächung, in dem z.B. der Flußsollwert proportional zum Quotient aus dem Nennfluß und der Drehzahl vorgegeben wird, sobald die Klemmenspannung den Nennwert überschreiten würde.

Für nicht stationäre Betriebszustände kann die Lastzustandsgröße $i_{\psi2}/\psi$ durchaus vom Tangons der Lastwinkels abweichen. Dabei kann es vorteilhaft sein, als Lastzustands-Istwert eine Größe

$$W = i_{\psi2}/(\psi + f(i_{\psi1}))$$

zu bilden, wobei $f(i_{\psi1})$ zum Zwecke einer Dämpfung eine der zeitlichen Ableitung $di_{\psi1}/dt$ proportionale Funktion und/oder zur Sicherung der Stabilität bei Lastwinkeln nahe 90° eine nur negative Werte von $i_{\psi1}$ auswertende Funktion sein kann. Diese und weitere vorteilhafte Weiterbildungen der Erfindung sind in den abhängigen ansprüchen gekennzeichnet.

Im Gegensatz zu der erwähnten, aus dem Buch "Industrie-Elektronik" bekannten Schaltung wird dem Drehzahlregler also die Frequenzsteuergröße als Ersatz-Istwert zugeführt. Dem Ausgangssignal des Lastzustandsreglers ist ebenfalls kein Drehzahlistwert direkt oder mittels eines unterlagerten Schlupfreglers aufgeschaltet, um die Frequenzsteuergröße und den Drehzahl-Ersatz-Istwert zu erhalten.

Gemäß der Erfindung sind bei der entsprechenden Vorrichtung im Istwertrechner zwei jeweils dem Betrag ($\psi$) des Flußvektors ($\psi$) und dem Wirkstrom ($i_{\psi2}$) proportionale Größen gebildet. Die flußproportionale Größe ist dem Divisoreingang, die wirkstromproportionale Ständerstromkomponente dem Dividendeneingang eines ersten Divdiergliedes zugeführt. Die Ausgangsgröße des ersten Divdiergliedes ist als Istwert, eine entsprechende, aus der Eingabegröße eines Funktionsgebers abgeleitete Größe als Sollwert der Lastzustandsgröße dem Lastzustandsregler aufgeschaltet. Insbesondere kann zur Bildung des Lastgrößensollwertes die Eingabegröße des Funktionsgebers dem Dividendeneingang eines zweiten Divdiergliedes und eine einem vorgebenen Wert des Flußbetrages entsprechende Sollgröße, z.B. der Nennwert des Hauptflusses, dem Divisoreingang eines Divdiergliedes zugeführt sein.

Im folgenden werden für den Hauptflußvektor $\underline{\psi}$ und die Komponenten des Ständerstromvektors die gleichen Symbole wie für die dazu proportionalen elektrischen Größen verwendet.

Da der Istwertrechner aus den ständerbezogenen Komponenten des Ständerstromes bereits den Wirkstrom $i_{\psi2}$ berechnet, bedeutet es einen unerheblichen Mehraufwand, auch den Magnetisierungsstrom $i_{\psi1}$ zu berechnen. Bei einer Weiterbildung der Erfindung wird die Größe $i_{\psi1}$ über ein Nachgebeglied zum Flußbetrag am Divisoreingang des ersten Dividiergliedes addiert. Dies führt zur Stabilisierung der Asynchronmaschine gegenüber Schwingungen bei Lastzustandsänderungen. Es kann auch vorteilhaft sein, zusätzlich die Größe $i_{\psi1}$ über eine Schwellwertschaltung, die im wesentlichen nur negative Werte für $i_{\psi1}$ (d.h. Werte, die unterhalb eines negativen oder eines kleinen positiven Schwellbetrages liegen) durchläßt, zur Größe am Divisoreingang des ersten Dividiergliedes zu addieren. Dadurch kann die Maschine stationär mit Lastwinkeln bis nahezu 90° betrieben werden, ohne bei Störungen, die zu ruckartigen Frequenzänderungen oder Phasenänderungen des Ständerstromes führen, zu kippen.

Die Erfindung wird anhand eines Ausführungsbeispieles und mehrerer Figuren näher erläutert.

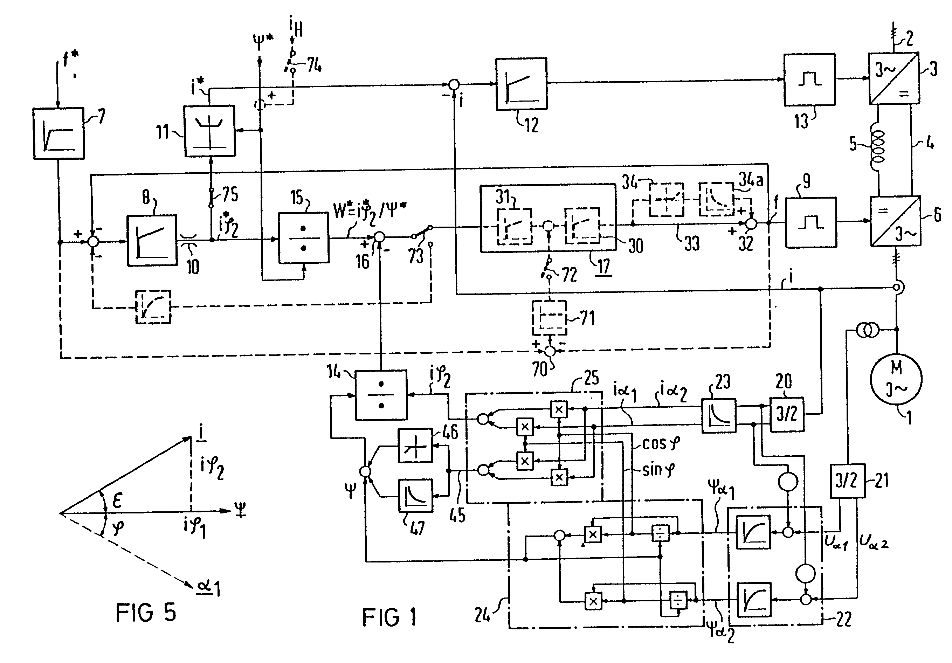

Figur 1 betrifft die Regelung einer Drehfeldmaschine 1, die von einem Umrichter gespeist wird, der aus einem über einen Netzanschluß 2 an ein Drehstromnetz angeschlossenen netzgeführten Stromrichter 3, einem Gleichstromzwischenkreis 4 mit einer Glättungsdrossel 5 und einem selbstgeführten Stromrichter 6 besteht. Der Asynchronmaschine 1 kann ein Drehzahl - Sollwert f* vorgegeben werden, wobei zum maschinengerechten Hochfahren ein Hochlaufgeber 7 vorgesehen sein kann. Am Eingang eines Drehzahlreglers wird die Regelabweichung eines Drehzahl-Istwertes von dem vorgegebenen Drehzahl-Sollwert f* gebildet, wobei anstelle eines Drehzahl-Meßwerts als Ersatz-Istwert die Stellgröße für die Ständerfrequenz vom Eingang des die Ventile des selbstgeführten Stromrichters 6 steuernden Steuersatzes 9 rückgeführt wird.

Der Drehzahlregler 8 dem eine Strombegrenzung 10 nachgeschaltet ist, speist einerseits über einen Funktionsgeber 11 einen unterlagerten Stromregler 12, der auf den die Ventile des netzgeführten Stromrichters 3 steuernden Steuersatzes 13 arbeitet. Die Kennlinie des Funktionsgebers 11 ist so eingestellt, daß aus der Eingangsgröße $i_{\psi2}^{*}$ der zu dem vorgebbaren Sollwert des Hauptflusses $\psi^*$, z.B. dem Nennfluß, gehörende Sollwert

$$i^* = \sqrt{i^{*}_{\psi1}{}^2 + i^{*}_{\psi2}{}^2}$$

für den Ständerstrombetrag gebildet wird. Andererseits speist der Drehzahlregler auch einen über den Steuersatz 9 auf die Ventile des selbstgeführten Stromrichters 6 arbeitenden Regler, bei dem als Istwerte in einem ersten Dividierer 14 der Quotient W der zu diesem Vektor senkrechten

Ständerstromkomponente (Wirkstrom) $i_{\psi2}$ und des Betrags des Hauptflußvektors $\psi$ gebildet wird. Das Ausgangssignal des Drehzahlreglers ist also gemeinsame Eingabegröße für den Funktionsgeber 11 (Stromsteuerstrecke) und für die Regelstrecke der Ständerfrequenz.

Bei dieser Regelung wird der Sollwert $\psi^*$ für den Fluß vorgegeben. Das gewünschte Drehmoment ergibt sich aus dem Sollwert $i^{*}_{\psi2}$ des Wirkstromes und wird entweder vom Ausgang des Drehzahlreglers 8 geliefert oder an dieser Stelle durch einen Geber von außen vorgegeben. Der Funktionsgebe 11 paßt den Stromsollwert i* an $i^{*}_{\psi2}$ an, daß der Fluß konstant bleibt. Der Stromregler 12 regelt über den Steuersatz 13 den Betrag des Maschinenstromes, wobei als zugehöriger Ist-Wert der Netzstrom in den Zuleitungen 2, der Strom im Zwischenkreis 4 oder der Maschinenstrom an den Klemmen der Asynchronmaschine abgegriffen werden kann. Da bei höheren Frequenzen der Maschinenstrom als Folge von Mehrfachkommutierungen im Wechselrichter geringer als der Netzstrom bzw. Zwischenkreisstrom ist, der für die Regelung maßgebende Strom jedoch in jedem Falle der Maschinenstrom ist, wird zumindest bei höheren Frequenzen vorteilhaft der Maschinenstrom zur Regelung herangezogen. Für kleine Frequenzen, bei denen eine Stromerfassung mit Wechselstromwandlern nicht ohne weiteres möglich ist, kann es vorteilhaft sein, von der Erfassung des Maschinenstromes auf die Erfassung des Netzstromes umzuschalten.

Der Sollwert W* der Lastzustandsgröße wird in einem zweiten Dividierer 15 als Quotient aus dem Wirkstromsollwert $i^{*}_{\psi2}$, der am Ausgang des Drehzahlreglers 8 ansteht, und dem vorgegebenen Sollwert des Flusses $\psi^*$ berechnet. Aus der an einer Vergleichsstelle 16 anliegenden Regelabweichung W*—W bildet ein nachgeschalteter Lastzustandsregler 17 die Stellgröße für die Ständerfrequenz, die als Steuerspannung dem Steuersatz 9 eingegeben wird Bei W>W* wird dabei die Ständerfrequenz erniedrigt.

Eine solche Regelung ermöglicht eine Betrieb mit Feldschwächung. So ist es z.B. möglich, als Sollwert $\psi^*$ zunächst den Nennfluß vorzugeben, dabei die Klemmenspannungs U zu messen und bei Erreichen eines Wertes $U_{max}$ den Sollwert des Hauptflusses $\psi^*$ um einen an Ausgang eines entsprechenden Reglers gebildeten, von der Regelabweichung U—$U_{max}$ abgeleiteten Betrag herabzusetzen. Dadurch wird vermieden, daß die zulässige Motorspannung überschritten wird, vielmehr wird in diesen Fällen der Sollwert W* in diesem Regelkreis erhöht und die Maschine mit konstanter Spannung (geschwächtem Fluß) betrieben. Soll jedoch durchweg mit konstantem Fluß gearbeitet werden, so ist W* proportional zu $i^{*}_{\psi2}$ und die Ausgangsgröße des Drehzahlreglers 8 kann auch ohne Verwendung eines zweiten Dividierers direkt zur Bildung der Regelabweichung herangezogen werden.

Die Istwerte für die Wirkstromkomponente $i_{\psi2}$ und den Fluß $\psi$ werden aus den mittels Meßwandlern abgegriffenen Klemmengrößen für Ständerstrom und Ständerspannung auf an sich bekannte Weise errechnet. Die Asynchronmaschine weist drei räumlich um 120° zueinander versetzte Ständerwicklungen auf. An zwei der drei Klemmen werden die dort auftretenden Momentanwerte für den Ständerstrom und die Klemmenspannung abgegriffen und in Koordinatenwandlern 20, 21 die Komponenten $i_{\alpha 1}$ und $i_{\alpha 2}$ bzw. $U_{\alpha 1}$ und $U_{\alpha 2}$ des Ständerstromvektors $i$ bzw. Ständerspannungsvektors $U$ bezüglich eines ständerbezogenen (raumfesten) kartesischen, zweiachsigen Bezugssystems umgerechnet. Nach dem Zusammenhand $e_{\alpha 1,2}=U_{\alpha 1,2}-i_{\alpha 1,2}\cdot R$ werden in einer EMK-Erfassungseinrichtung 22 daraus die Komponenten $e_{\alpha 1}$, $e_{\alpha 2}$ des in der Ständerwicklung induzierten EMK-Vektors bezüglich dieses kartesischen Koordinatensystems berechnet und daraus durch Integration die Komponenten $\psi_{\alpha 1}$ und $\psi_{\alpha 2}$ des Hauptflußvektors gebildet. Da die Istwerte dieses Vektors vom Zeitverhalten der nicht-idealen Integratoren verfälscht sind, ist für die Komponenten des Ständerstrom-Vektors ein Übertragungsglied 23 mit einem entsprechend verfälschenden Zeitverhalten vorgesehen, um für die weitere Berechnung die gleiche Dynamik für den Ständerstromvektor und den Flußvektor zu erhalten. Im Vektoranalysator 24 wird nun der Winkel $\psi$ bestimmt, den der Flußvektor $\underline{\psi}$ mit der Abszisse $\underline{a}_1$ des ständerbezogenen Koordinatensystems einschließt. Hierbei sind nur cos $\psi=\psi_{\alpha 1}/\psi$ und sin $\psi=\psi_{\alpha 2}/\psi$ von Interesse, zu deren Bildung die Größen $\psi_{\alpha 1}$ bzw. $\psi_{\alpha 2}$ in Dividiergliedern durch den Betrag $\psi$ des Flußvektors dividiert werden. Dieser Flußbetrag

$$\psi=\psi_{\alpha 1}{}^2/\psi+\psi_{\alpha 2}{}^2/\psi$$

wird an einer Verknüpfungsstelle abgegriffen, der die Ausgänge entsprechender von $\psi_{\alpha 1}$ bzw. $\psi_{\alpha 2}$ und den Dividererausgangssignalen beaufschlagten Multiplizierern addiert werden, Die hier erhaltene Größe $\psi$ wird zum Divisoreingang der Dividierer zurückgeführt. Die Größe $i_{\psi 2}$ wird in einem Vektordreher 25 nach der Transformationsformel

$$i_{\psi 2}=-i_{\alpha 1}\sin\psi+i_{\alpha 2}\cos\psi$$

berechnet. Bei einer (später noch genauer beschriebenen) Weiterbildung der Erfindung wird auch der Magnetisierungsstrom $i_{\psi 1}$ im Vektordreher 25 entsprechend der Formel

$$i_{\psi 1}=i_{\alpha 1}\cos\psi+i_{\alpha 2}\text{syn}\psi$$

berechnet. Der berechnete Istwert des Wirkstroms $i_{\psi 2}$ wird dem Dividendeneingang des Dividierers 14 zugeführt.

Die Lastzustandsgröße W, die im stationären Fall dem Tangens des Lastwinkels entspricht, wird im Regler 17 in eine Steuergröße (Stellgröße) für die Ständerfrequenz umgesetzt. Die überlagerte Drehzahlregelung verwendet anstelle des Drehzahl-Istwertes die Ständerfrequenz f, die sich im stationären Fall lediglich um den Schlupfwert unterscheidet. Um den Istwert der Ständerfrequenz auch dynamisch der Drehzahl ähnlicher zu gestalten kann dem ersten Dividierer 14 ein Glättungsglied nachgeschaltet sein.

Um die Wirkungsweise der Regelung zu verdeutlichen, sei ein motorischer Laststoß auf die Welle der Ayncnronmaschine angenommen. Dadurch verringert sich die Drehzahl, der Schlupf erhöht sich und der Fluß bricht ein. Ein verringerter Fluß führt zu einer Erhöhung des Lastzustand-Istwertes W, in deren Folge der Lastzustandsregler 17 die Stellgröße für die Ständerfrequenz verringert und sie der nachgebenden Drehzahl so nachführt, daß der Fluß und der Schlupf konstant bleiben. Die Verringerung der Ständerfrequenz führt jedoch am Drehzahlregler 8 zu einer Vergrößerung des Ausgangssignales, also einer Erhöhung des Wirkstromsollwertes $i_{\psi 2}^*$. Die Folge ist ein höheres Drehmoment, das vorübergehend das Lastmoment übersteigt, bis die Drehzahl wieder ihren ursprünglichen Werte erreicht hat und das Drehmoment dem Lastmoment das Gleichgewicht hält.

Um den Stromrichter vor Überströmen zu schützen, ist es vorteilhaft, den Ständerstrom auf seinen Nennwert zu begrenzen. Da der Magnetisierungsstrom-Sollwert $i_{\psi 1}^*$ bereits durch Vorgabe des Nennflusses vorgegeben ist, kann die Strombegrenzung unter der Voraussetzung, daß der Stromregelkreis sehr schnell arbeitet, durch Begrenzung des Wirkstromsollwertes $i_{\psi 2}^*$ am Ausgang der Drehzahlreglers 8 vorgenommen werden.

Dabei ist es vorteilhaft, den Lastzustandsregler 17 aus zwei hintereinander angeordneten IP-Reglern aufzubauen: dem eigentlichen W-Regler 30 und einem vorgeschalteten "Schleppregler" 31. Um nämlich bei einer Lastzustandsänderung die Ständerfrequenz der sich infolge der Lastzustandsänderung kontinuierlich verändernden Drehzahl so nachzuführen, daß der Nennschlupf nicht überschritten wird, benötigt der W-Regler 30 ständig eine Eingangsspannung, die bis zur Einstellung eines neuen stationären Zustandes mitgeschleppt werden muß. Z.B. wird eine konstante Eingangsspannung benötigt, um die Stellgröße für die Ständerfrequenz am Reglerausgang nach einer Rampenfunktion zu verändern. Während des Einlaufens in den dem neuen Lastzustand entsprechenden stationären Zustand soll jedoch der Fluß-Istwert $\psi$ auf dem entsprechenden Sollwert gehalten werden.

Dies wird durch den "Schleppregler" 31 erreicht, der bereits bei einer geringen Regelabweichung W*—W zu Beginn der Lastzustandsänderung eine Spannung an den Eingang des Reglers 30 legt. Der Regler 30 führt nun die Ständerfrequenz der der Lastzustandsänderung fogenden Drehzahländerung so nach, daß die Regelabweichung W*—W verschwindet. Der Regler 30 bewirkt die kontinuierliche Verstellung der Ständerfrequenz auch noch während der Zeit, in der die Drehzahl auf den zum neuen Lastzustand gehörenden stationären Wert einläuft, wobei der Istfluß dem Sollfluß unter Verschwinden der Regelabweichung am Eingang des Reglers 31 nachgeführt wird, da der Regler 31 während dieser Zeit sein konstantes Ausgangssignal beibehält. Bei Erreichen des neuen stationären Zustands bewirkt da sich zunächst noch ändernde Ausgangssignal des W-Reglers 30, daß am Eingang des Reglers 31 eine kurzzeitige, geringfügige Regelabweichung W*—W entsteht, durch die das Ausgangssignal des. Reglers 31 auf Null zurückläuft. Folglich bleibt das Ausgangssignal des Reglers 30 auf dem erreichten Wert stehen.

Dadurch wird die Dynamik des Lastzustandsreglers 17 wesentlich verbessert und der Fluß wird auch bei dynamischen Zustandsänderungen praktisch auf dem Sollwert gehalten. Dabei ist eine gute Regelung auch dann möglich, wenn (z.B. beim Hochfahren) der Wechselrichter praktisch mit maximal zulässiger Strombelastung betrieben wird. Insbesondere ist die Verwendung zweier hintereinander geschalteter Regeler vorteilhaft, wenn als Drehzahlistwert kein an der Maschine direkt gemessener Istwert, sondern der dem entsprechenden Steuersatz 9 einzugebende Sollwert verwendet wird.

Da der Ständerstromvektor nicht kontinuierlich, sondern entsprechend den angesteuerten Spulen der Ständerwicklung sprunghaft rotiert, enthält der Wirkstrom $i_{\psi 2}$ und somit der W-Istwert Oberschwingungen, die insbesondere bei kleinen Frequenzen stören. Daher wird in diesem Betriebsbereich vorteilhaft mit kleiner Verstärkung des Lastzustandsreglers gearbeitet. Im Motorbetrieb bei hohen Frequenzen, wo der Kommutierungsverzugswinkel entdämpfend wirkt, besteht die Gefahr von Schwingungen, die durch eine hohe Reglerverstärkung bedämpft werden können, Es ist daher vorteilhaft, den Lastzustandsregler 17 mit einem Adaptionsglied zu versehen, das die Reglerverstärkung bei hohen Maschinenfrequenzen erhöht. Bevorzugt ist eine Additionsstufe 32 am Reglerausgang vorgesehen, der die Ausgangsgröße des Lastzustandsreglers 17 mittels einer Parallelschaltung direkt über die Leitung 33 und über einen Verstärker 34 mit überproportional steigender Verstärkungs-Kennlinie aufgeschaltet ist. Dabei hat es sich ferner vorteilhaft erwiesen, dem Verstärker ein Übertragungsglied 34a mit dem Frequenzgang

$$F_A = sT_1/(1+sT_2)$$

nachzuschalten. Ein derartiges Übertragungsglied wirkt glättend und differenzierend, d.h. Änderungen der Reglerausgangsgröße werden dynamisch verstärkt, ohne den stationären Zustand zu beeinflussen. Die Konstanten $T_1$ und $T_2$ sind nicht kritisch. Diese Werte können durch Optimierung für den Anwendungsfall leicht gefunden werden Vorteilhafte Werte sind z.B. $T_1 = 100$ ms, $T_2 = 25$ ms.

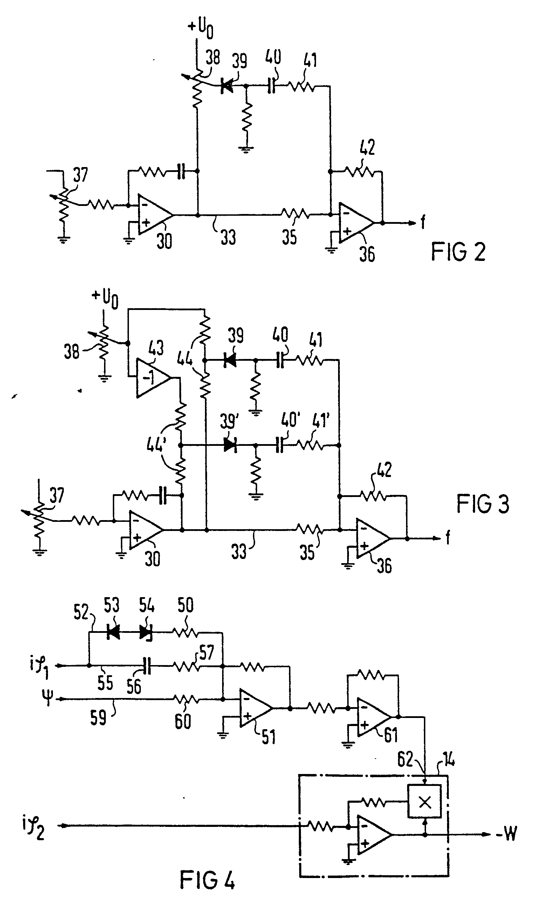

Figur 2 zeigt eine einfache Schaltung für das Adaptionsglied. Mit 30 ist ein als IP-Regler beschalteter Operationsverstärker bezeichnet, der als Lastzustandsregler, z.B. als der oben erwähnte W-Regler, dient. Der Reglereingang ist mit dem Abgriff eines von dem Ausgangssignal des Schleppreglers 31 beaufschlagten Potentiometers 37 verbunden, an dem die Verstärkung des Reglers 30 eingestellt werden kann. Der Reglerausgang ist über eine Leitung 33 und einen Widerstand 35 an dem Eingang eines weiteren Operationsverstärkers 36 angeschlossen. Ferner liegt am Reglerausgang über ein Potentiometer 38 eine Spannung an, die positiv gewählt ist, falls zur Verwirklichung der Schaltung die invertierenden Eingänge der Operationsverstärker 30 und 36 verwendet werden. Der Abgriff des Potentiometers 38 ist über eine Reihenschaltung einer Diode 39, einer Kapazität 40 und eines Widerstandes 41 an dem Eingang des weiteren Operationsverstärkers 36 mit dem Rückführwiderstand 42 angeschlossen. Der zur Kapazität 40 führende Ausgang der Diode ist vorteilhaft über einen Widerstand geerdet.

Bei gegebener Drehrichtung ist die Frequenzsteuergröße f (der Ausgang des W-Reglers) negativ, wobei niedrigen Frequenzen kleine Werte für f entsprechen. Das Potentiometer 38 ist so eingestellt, daß am Abgriff eine geringfügige positive Spannung anliegt. Die Diode ist so geschaltet, daß sie in dieser Lage sperrt, jedoch leitend wird, sobald bei einer größeren Frequenz das Reglerausgangssignal stärker negativ wird und die am Potentiometer 38 abgegriffene Spannung sinkt. Daher besitzt bei niedrigen Frequenzen (gesperrter Diode) diese Schaltung die vom Verhältnis der Widerstände 42 und 35 bestimmte Verstärkung, bei größeren Frequenzen (leitende Diode) ist die Verstärkung durch das Verhältnis des Widerstandes 42 zu dem aus den Parallelwiderständen 35 und 41 gebildeten Widerstand gegeben. Der Einsatzpunkt für die Adaption (Vergrößerung der Verstärkung) kann am Potentiometer 38 eingestellt werden.

Ein Umkehrung der Maschinendrehrichtung kann durch eine Vorzeichenumkehr der Frequenzsteuergröße f bewirkt werden. In diesem Fall liegt am Potentiometerabgriff stets eine positive Spannung an und die Diode 39 in Figur 2 sperrt dauernd. Für die Anwendung ist Figur 2 durch Figur 3 ersetzt, bei der die am Potentiometer 38 abgegriffene Spannung über einen Spannungsteiler 44 und zusätzlich mittels eines Invertierers 43 und eines entsprechenden Spannungsteilers 44' ebenfalls am Ausgang des Reglers 30 liegt. Die invertierte Potentiometer-Abgriffspannung wird ebenfalls über eine Diode 39', einen Kondensator 40' und einen Widerstand 41' an den Eingang des Verstärkers 36 gelegt. Dadurch wird auch bei Vorzeichenumkehr der Frequenzsteuergröße f auf die oben erläuterte Weise eine Adaption erreicht.

Wie bereits erwähnt wurde, entsprechen im stationären Fall die Lastzustandsgröße W dem Tangens des Lastwinkels und, bei konstantem Fluß, das Drehmoment der Wirkstromkomponente (und somit ebenfalls dem W-Istwert). Ein größerer Drehmoment-Sollwert (d. h. W\*−W>0) erhöht ferner die Frequenz, d.h. Schlupf und Lastwinkel wachsen. Dies bedeutet zwar, daß für Lastwinkel <90° das Ist-Drehmoment wächst (wie gefordert wird), für Lastwinkel >90° jedoch absinkt. Bei Lastwinkeln von etwa 90° besteht daher die Gefahr des Kippens. Wird nämlich durch eine Störeinwirkung (z.B. einen Frequenzsprung in der Ständerfrequenz) der Lastwinkel $\varepsilon$ (siehe Figur 5) ruckartig von z.B. 70° auf 110° abgelenkt, so ergibt sich keine Änderung der Wirkstromkomponente $i_{\psi2}=i \cdot \sin\varepsilon$ und aufgrund der hohen Flußzeitkonstante verändert sich auch der Fluß $\psi$ nur langsam. Der Istwert W wird also nur langsam verändert; die Regelung reagiert zunächst praktisch nicht auf die Störung; die Maschine kippt. Dies kann jedoch durch eine zusätzliche Einwirkung auf den W-Istwert vermieden werden, die bei Überschreiten eines Grenzwertes für den Lastwinkel, insbesondere bei Lastwinkeln über 90° (d.h. bei Winkeln, bei denen die flußparallele Magnetisierungsstromkomponente $i_{\psi1}$ negativ wird), die Steuergröße der Ständerfrequenz bei schnellen Winkeländerungen rasch verstellt.

Dies wird vorzugsweise dadurch erreicht, daß am Divisoreingang des Dividierers 14 zum Flußvektor $\psi$ der im Vektordreher 25 ebenfalls errechnete Magnetisierungsstrom $i_{\psi1}$ addiert wird, sobald dieser Strom einen vorgegebenen Grenzwert S unterschreitet. Zu diesem Zweck ist der $i_{\psi1}$-Ausgang 45 des Istwertrechners über eine Sperrschaltung 46 zu der am Divisoreingang anliegenden Größe $\psi$ aufgeschaltet. Als Grenzwert ist vorteilhaft ein negativer oder allenfalls ein kleiner positiver Wert gewählt, so daß praktisch alle positiven $i_{\psi1}$-Werte abgeblockt, negative Werte jedoch zu $\psi$ addiert werden. Der normale Betriebsbereich (Lastwinkel unter 90°) wird daher durch diese Schaltung nicht beeinflußt; vergrößert sich der Lastwinkel jedoch über 90°, so wird der Nenner der Lastzustands-Istgröße W erniedrigt, also der W-Istwert ruckartig erhöht. Über den Lastzustandsregler wird daher die Frequenz abgesenkt, bis wieder ein Winkel in normalen Betriebsbereich erreicht wird. Dies verhindert ein Kippen der Maschine. Soll die Maschine beispielsweise bis zu einem Lastwinkel von 80° betrieben werden, so wird die Schwelle so gewählt, daß bei einem Lastwinkel von 110° der zum maximalen Ständerstrom gehörende Magnetisierungsstrom noch abgeblockt wird, stärker negative Magnetisierungsstromwerte jedoch auf den Nenner des W-Istwertes einwirken. Dadurch wird der Normalbetrieb, bei dem der Stromvektor mit ±30° um einen mittleren Lastwinkel pendelt, durch die Sperrschaltung nicht beeinflußt, bei größeren Lastwinkeln jedoch eine das Kippen verhindernde Absenkung des Ständerfrequenz erreicht.

Es hat sich ferner gezeigt, daß der Magnetisierungsstrom $i_{\psi1}$ sich auch gut zur Bedämpfung des Lastzustandsregelkreises eignet. Der Quotient $i_{\psi2}/\psi$ ist infolge der Flußträgheit ein sich relativ langsam ändernder Istwert. Das kann zu Schwingungen führen. Man erzielt eine dämpfende Wirkung auf die Lastzustandsregelung, wenn zum Nenner dieses Quotienten der (sich rascher ändernde) Istwert $i_{\psi1}$ dynamisch aufgeschaltet wird. Das stationäre Verhalten der Regelung soll unbeeinflußt werden, d.h. der Magnetisierungsstrom-Istwert $i_{\psi1}$ wird über ein Nachgebeglied 47 am Eingang der Dividierers 14 zum Fluß-Istwert $\psi$ aufgeschaltet. Ein derartiges Nachgebeglied ist durch eine stark abklingende Sprungantwortfunktion gekennzeichnet, d.h. auf ein sprunghaft vergrößertes Eingangssignal reagiert das Nachgebeglied mit einem hohen positiven, jedoch rasch abklingenden Ausgangssignal. Dadurch werden Schwingungen des Flusses vermieden.

In Figur 4 ist eine Schaltungsanordnung für einen derartigen Dividierer angegeben, dessen Divisoreingang eine derartige Sperrschaltung und ein Nachgebeglied vorgeschaltet ist. Eine am Ausgang 45 des Istwertrechners abgegriffene Spannung $i_{\psi1}$ bewirkt in einer über eine Widerstand 50 zum Eingang eines Operationsverstärkers 51 führenden Leitung 52 einen Strom, der nur bei negativen Stromwerten von einer in dieser Leitung angeordneten, entsprechend gepolten Diode 53 durchgelassen wird. Eine dazu in Reihe angeordnete Zener-Diode 54 läßt ebenfalls nur bei negativen unterhalb der Schwellspannung liegenden $i_{\psi1}$-Werten einen Stromfluß zu. In einer zweiten zum Eingang des Operationsverstärkers 51 führenden Leitung 55 bewirkt ein Kondensator 56, daß nur bei einer Änderung der Eingangsspannung $i_{\psi1}$ ein kurzer Ladestromstoß über die Leitung 55 und einen Widerstand 57 zum Verstärkereingang 51 fließt. Ferner führt die am Istwertrechner abgegriffene Spannung $\psi$ in einer weiteren Leitung 59 zu einem entsprechenden, über den Widerstand 60 zum Operationsverstärker 51 fließenden Strom, so daß am Ausgang des Verstärkers 51 eine Größe anliegt, die im stataionären Fall und bei normalen Lastwinkel der Größe $\psi$ entspricht, bei Lastwinkel über 90° und/oder bei Änderungen der Magnetisierungsstromkomponente $i_{\psi1}$ jedoch entsprechend den vorstehenden Erläuterungen modifiziert ist. Dieses Ausgangssignal, das zur Herstellung der richtigen Polarität gegebenenfalls in einem Invertierer 61 invertiert wird, wird dem Divisoreingang 62 Dividierers 14 zugeführt, dessen Dividendeneingang von Istwert $i_{\psi2}$ beaufschlagt ist.

Da bei sehr niedrigen Frequenzen, z.B. Frequenzen unterhalb 10% der Nennfrequenz, die Erfassung der Istwerte für Ständerstrom und Ständerspannung mittels Meßwandlern fehlerhaft ist und auch die Berechnung der entsprechenden Komponenten des Stromvektors, des EMK-Vektors und Flußvektors ungenau ist, können insbesondere beim Anfahren Schwierigkeiten entstehen.

Diese Schwierigkeiten können umgangen werden, wenn bei niedrigen Frequenzen der Lastzustandsregelkreis aufgetrennt und an den Eingang des Lastzustandsreglers 17 anstelle der Regelabweichung W\*−W des Lastzustandes eine entsprechende Regelabweichung f*—f zwischen einem eingebbaren Frequenz-Sollwert f* und der Frequenzsteuergröße f gelegt wird. Bei der in Figur 1 gezeigten Anordnung, bei der der Drehzahlregler 8 dem gemeinsamen Eingang für die Stromsteuerstrecke und die Lastzustandsregelung vorgelagert ist, kann diese Frequenz-Regelabweichung vom Drehzahlreglereingang oder einer entsprechenden Vergleichsstelle 70 abgegriffen, ggf. an einem P-Verstärker 71 verstärkt und über den Schalter 72 an den Lastzustandsregler gelegt werden. Bei niedrigen Frequenzen ist der Schalter 72 geschlossen, gleichzeitig ist die von der Vergleichsstelle 16 kommende Leitung für die Regelabweichung W*—W über einen Schalter 73 geöffnet. Die Schalter 72 und 73 bewirken demnach eine Umschaltung von selbsttätiger Ständerfrequenzregelung auf eine Steuerung der Ständerfrequenz. Im Falle eines aus zwei IP-Regler bestehenden Lastzustandsreglers führt der Schalter 72 zum Eingang des zweiten W-Reglers 30. Der Schleppregler 31 ist bei geöffnetem Schalter 73 außer Betrieb; wird als Schleppregler ein Operationsverstärker verwendet, so kann z.B. sein Ausgang mit dem invertierenden Eingang kurzgeschlossen werden, so daß der Reglerausgang auf Null steht.

Bei einer derartigen Steuerung führt eine Zunahme des Ständerstromes nur dann zu einem höheren Drehmoment, wenn der Lastwinkel kleiner als 45° gehalten wird. Um die Maschine am Kippen zu hindern, wird daher bei diesem Betriebszustand mit einem hohen Magnetisierungsstrom gefahren. Hierzu dient ein im normalen Betriebszustand geöffnet gehaltener Schalter 74, der bei niedrigen Frequenzen geschlossen wird und einen zusätzlichen Magnetisierungsstrom - Sollwert (Hochlaufstrom $i_H$) auf den Eingabeeingang für den Flußsollwert $\psi^*$ aufgeschaltet. Auf diese Weise wird erreicht, daß im Funktionsgeber 11 ein entsprechend hoher Stromsollwert i* gebildet wird. Vorteilhaft ist dabe dem Funktionsgeber an seinem Eingang für die Eingabegröße $i^*_{\psi 2}$ ein Trennschalter 75 vorgeschaltet, dessen Öffnen bei niedrigen Frequenzen den Funktionsgeber vom Drehzahlregler 8 abkoppelt. Der Funktionsgeber 11 gibt dann den Sollwert i* nur in Abhängigkeit vom Hochlaufstrom $i_H$ an und reagiert nicht auf Schwankungen der Drehzahlregler-Ausgangsgröße $i^*_{\psi 2}$. Um beim Übergang in Normalbetrieb (Öffnen des Schalters 74) eine ruckartige Änderung des Stromsollwertes i* zu vermeiden, kann dem Schalter 74 vorteilhaft ein Glättungsglied nachgeschaltet sein.

Im gesteuerten Betrieb, d.h. bei geöffnetem Schalter 73 können die oben beschriebenen Fehler des Istwertrechners an der Verknüpfungsstelle 16 zu größeren Regelabweichungen führen. Beim Erreichen der Umschaltgrenze von gesteuerten auf geregelten Betrieb, z.B. also bei Erreichen von 10% der Nenndrehzahl, wird nun der Schalter 72 geöffnet und der Schalter 73 (ggf. auch Schalter 75) geschlossen. Die in diesem Augenblick zufällig an der Verknüpfungsstelle 16 anstehende Regelabweichung führt nun zunächst zu einer Verstellung des Lastzustandsreglers und damit zu einer ruckartigen Frequenzänderung, bis der nun geschlossene Regelkreis die Regelabweichung W*—W zum Verschwinden gebracht hat. Ein derartiger Umschaltruck kann jedoch vermieden werden, wenn gleichzeitig mit dem Öffnen des Schalters 73 die an der Verknüpfungsstelle 16 anliegende Regelabweichung zum Drehzahlregler zurückgeführt und von der an dessen Eingangs anstehenden Größe f*—f subtrahiert wird. Dazu kann der Schalter 73 als Umschalter ausgebildet sein. Durch diese Rückführung wird der vom Drehzahlregler gelieferte Sollwert $i^*_{\psi 2}$ dem im Dividierglied 14 berechneten Istwert W so nachgeführt, daß die Differenz W*—W an der Verknüpfungsstelle 16 verschwindet. Zum Zeitpunkt des Umschaltens haben dann sowohl der Drehzahlregler 8 wie der Schleppregler 31 die zur verschwindenden Regelabweichung gehörende Stellung und es erfolgt ein weicher Übergang vom gesteuerten in den geregelten Betriebszustand.

## Patentansprüche

1. Verfahren zur Regelung einer umrichtergespeisten Asynchronmaschine, mit folgenden Merkmalen:

a) aus der Regelabweichung zwischen einem vorgegebenen Drehzahl-Sollwert (f*) und einem Ersatz-Istwert wird ohne Erfassung der Läuferdrehzahl eine einem Soll-Wirkstrom entsprechende Stromsteuergröße ($i_{\psi 2}$*) gebildet;

b) die Amplitude des Umrichter-Ausgangsstromes wird entsprechend der Amplitude (i*) eines aus dem Soll-Wirkstrom ($i_{\psi 2}$*) und einem einem vorgegebenen Fluß ($\psi$*) entsprechenden Soll - Magnetisierungsstrom gebildeten Soll-Ständerstrommes geregelt;

c) aus Istwerten von Ständerstrom und Ständerspannung werden die Istwerte des Wirkstromes ($i_{\psi 2}$) und des Flußbetrages ($\psi$) berechnet und daraus wird als Quotient eine Lastzustandsgröße (W) gebildet die in stationären Betrieb dem Tangens des Lastwinkels entspricht, und

d) die Frequenz des Umrichter-Ausgangsstromes wird mit einer Frequenzsteuergröße (f) gesteuert, die aus der Regelabweichung des Istwertes (W) und eines aus der Stromsteuergröße ($i_{\psi 2}$*) gebildeten Sollwertes (W*=$i_{\psi 2}$*/$\psi$*) der Lastzustandsgröße gebildet wird, und

e) als Ersatz-Istwert wird die Frequenzsteuergröße (f) verwendet.

2. Verfahren nach Anspruch 1, dadurch gekennzeichnet, daß bei Überschreiten eines oberen Grenzwertes für den Lastwinkel-Istwert (W) oder bei Unterschreiten eines unteren Grenzwertes für den aus Ständerstrom und Ständerspannung berechneten Magnetisierungsstrom-Istwert ($i_{\psi 1}$) auf den Istwert der Lastzustandsgröße im Sinne einer Verminderung der Frequenzsteuergröße eingegriffen wird.

3. Verfahren nach Anspruch 1 oder 2, dadurch gekennzeichnet, daß bei instationären Zuständen ein Istwert (W) der Lastzustandsgröße gebildet wird, der dem Quotienten des Ist-Wirkstromes ($i_{\psi 2}$) und des durch dynamische Aufschaltung (47) des Magnetisierungsstrom-Istwertes ($i_{\psi 1}$) auf den Flußbetrag ($\psi$) modifizierten Flußbetrages entspricht.

4. Anordnung zur Durchführung des Verfahrens nach Anspruch 1 mit folgenden Merkmalen:

a) ein Drehzahlregler (8) bildet aus der Regelabweichung zwischen einem vorgegebenen Drehzahl-Sollwert (f*) und einem Ersatz-Istwert eine einem Soll-Wirkstrom entsprechende Stromsteuergröße ($i_{\psi 2}$*),

b) ein Funktionsgeber (11) errechnet aus dem Soll-Wirkstrom und einem einem vorgegebenen Fluß ($\psi$*) entsprechenden Soll-Magnetisierungsstrom den Sollwert (i*) für die Amplitude des Ständerstromes, die über einen Strombetragsregler (12) den netzgeführten Stromrichter eines an ein Drehstromnetz angeschlossenen, eine Asynchronmaschine (1) speisenden Umrichters (3 bis 6) mit einem Gleichstromzwischenkreis und einem selbstgeführten Stromrichter regelt,

c) ein Istwert-Rechner (14, 20 bis 25) mit einem ersten Dividierglied (14), dessen Eingängen je eine dem Betrag des Flußvektors und dem Wirkstrom proportionale Größe zugeführt sind, berechnet aus Istwerten von Ständerstrom und Ständerspannung den Istwert eine Lastzustandsgröße (W), die im stationären Fall dem Tangens des Lastwinkels ($\varepsilon$=arc tan $i_{\psi 2}/i_{\psi 1}$) entspricht,

d) ein von der Regelabweichung zwischen einem aus dem Soll-Wirkstrom ($i_{\psi 2}$*) abgeleiteten Lastzustandsgrößen-Sollwert (W*=$i_{\psi 2}$*/$\psi$*) und dem Lastzustandsgrößen-Istwert (W) beaufschlagter Lastzustandsregler (17) liefert eine Frequenzsteuergröße, mit der der selbstgeführte Stromrichter gesteuert wird, und

der Ersatz-Istwert für den Drehzahlregler (8) ist ohne Verwendung einer Drehzahl-Erfassungseinrichtung am Lastzustandsgrößenregler-Ausgang für die Frequenzsteuergröße (f) abgegriffen.

5. Anordnung nach Anspruch 4, dadurch gekennzeichnet, daß der Istwert-Rechner jeweils eine dem Betrag ($\psi$) des Flußvektors ($\psi$) und dem Wirkstrom proportionale Größe bildet, die den Eingängen eines ersten Dividiergliedes (14) zur Bildung des Lastzustandsgrößen-Istwertes zugeführt sind.

6. Anordnung nach Anspruch 5, dadurch gekennzeichnet, daß als Sollwert dem Lastzustandsregler (14) die Ausgangsgröße eines zweiten Dividiergliedes (15) zugeführt ist, dessen Dividendeneingang die Eingabegröße des Funktionsgebers (11) und dessen Divisoreingang eine einem vorgegebenen Wert des Flußbetrages entsprechende Sollgröße ($\psi$*) zugeführt ist.

7. Anordnung nach Anspruch 5 oder 6, dadurch gekennzeichnet, daß im Istwertrechner auch eine der flußvektorparallelen Ständerstromvektorkomponente proportionale Größe ($i_{\psi 1}$) berechnet ist und daß diese Größe über ein Nachgebeglied zu der dem Flußbetrag proportionalen Größe ($\psi$) am

Divisoreingang des ersten Dividiergliedes (14) addiert ist.

8. Anordnung nach einem der Ansprüche 5 bis 7, dadurch gekennzeichnet, daß im Istwertrechner (25) auch eine der flußvektorparallelen Ständerstromvektorkomponente proportionale Größe ($i_{\psi 1}$) berechnet und diese Größe bei einem unterhalb eines Mindestwertes liegenden Wert über eine Sperrschaltung (46) zu der dem flußvektorproportionalen Größe am Divisoreingang des ersten Dividiergliedes (14) addiert ist.

9. Anordnung nach einem der Ansprüche 5 bis 8, dadurch gekennzeichnet, daß der Lastzustandsregler (17) aus zwei hintereinander geschalteten IP-Reglern (30, 31) besteht.

10. Anordnung nach einem der Ansprüche 5 bis 9, dadurch gekennzeichnet, daß dem Lastzustandsregler (17) ein Adaptionsglied nachgeschaltet ist und daß das Adaptionsglied eine Verknüpfungsstelle (32) enthält, der die Ausgangsgröße des Lastzustandsreglers (17) über eine Parallelschaltung direkt (33) und über einen Verstärker (34) mit überproportional steigender Verstärkungskennlinie aufgeschaltet ist.

11. Anordnung nach Anspruch 10, dadurch gekennzeichnet, daß dem Verstärker (34) ein differenzierendes und glättendes Übertragungsglied (34a) nachgeschaltet ist.

12. Anordnung nach einem der Ansprüche 4 bis 11, gekennzeichnet durch Umschaltmittel (72 bis 75) für den Übergang zwischen einem drehzahlgeregelten Normalbetrieb und einem drehzahlgesteuerten niederfrequenten Betrieb der Drehfeldmaschine, die

a) den Eingang des Lastzustandsreglers von der Regelabweichung (W—W*) der Lastzustandsgröße auf die Differenz zwischen dem Drehzahlsollwert (f*) und der Frequenzsteuergröße (f) umschalten,

b) am Funktionsgebereingang dem vorgegebenen Fluß einen zusätzlichen Magnetisierungsstromwert ($i_H$) vorgeben, insbesondere unter Trennung des Eingabeeingangs für den Soll-Wirkstrom ($i_{\psi 2}$*), und

c) die im niederfrequenten Bereich vom Eingang des Lastzustandsreglers getrennte Regelabweichung (W—W*) dem Drehzahlregler-Eingang rückführen.

## Revendications

1. Procédé pour régler une machine asynchrone alimentée par un convertisseur statique, et présentant les caractéristiques suivantes:

a) une grandeur de commande du courant ($i_{\psi 2}$*) correspondant à un courant actif de consigne est formé à partir de l'écart de réglage entre une valeur de consigne prédéterminée (f*) de la vitesse de rotation et une valeur réelle de substitution, sans détection de la vitesse de rotation du rotor;

b) l'amplitude du courant de sortie de convertisseur statique est réglée en fonction de l'amplitude (i*) d'un courant statorique de consigne formé à partir du courant actif de consigne ($i_{\psi 2}$*) et d'un

courant magnétisant de consigne correspondant à un flux ($\psi^*$) prédéterminé;

c) les valeurs réelles du courant actif ($i_{\psi 2}$) et de la valeur ($\psi$) du flux sont calculées à partir de valeurs réelles du courant statorique et de la tension statorique, et à partir de la se trouve calculée, sous la forme d'un quotient, une grandeur (W) de l'état de la charge qui, pendant le fonctionnement stationnaire, correspond à la tangente de l'angle de charge, et

d) la fréquence du courant de sortie du convertisseur statique est commandée au moyen d'une grandeur (f) de commande de la fréquence, qui est formée à partir de l'écart de réglage entre la valeur réelle (W) et une valeur de consigne ($W^* = i_{\psi 2}^*/\psi^*$), formée à partir de la grandeur ($i_{\psi 2}^*$) de commande du courant, de la grandeur de l'état de charge, et

e) comme valeur réelle de substitution on utilise la grandeur (f) de commande de la fréquence.

2. Procédé suivant la revendication 1, caractérisé par le fait que lorsque la valeur limite (W) de l'angle de charge dépasse une valeur limite supérieure ou bien lorsque la valeur réelle ($i_{\psi 1}$) du courant magnétisant calculée à partir du courant statorique et de la tension statorique, la valeur réelle de la grandeur de l'état de la charge est influencée dans le sens d'une réduction de la grandeur de commande de la fréquence.

3. Procédé suivant la revendication 1 ou 2, caractérisé par le fait que dans le cas d'états non stationnaires, une valeur réelle (W) de la grandeur de l'état de la charge est formée, cette valeur correspondant au quotient du courant actif réel ($i_{\psi 2}$) et de la valeur de flux modifiée par l'action dynamique (47) de la valeur réelle ($i_{\psi 1}$) du courant magnétisant sur la valeur ($\psi$) du flux.

4. Dispositif pour la mise en oeuvre du procédé suivant la revendication 1, présentant les caractéristiques suivantes:

a) un régulateur (8) de la vitesse de rotation forme, à partir de l'écart de réglage entre une valeur de consigne prédéterminée (f*) de la vitesse de rotation et une valeur réelle de substitution, une grandeur ($i_{\psi 2}^*$) de commande du courant, correspondant à un courant actif de consigne,

b) un générateur de fonction (11) calcule, à partir du courant actif de consigne et d'un courant magnétisant de consigne correspondant au flux ($\psi^*$) prédéterminé, la valeur de consigne (i*) pour l'amplitude du courant statorique, qui règle, par l'intermédiaire d'un régulateur (12) de la valeur du courant, le convertisseur de courant, commuté par le réseau, d'un convertisseur statique (3 à 6) raccordé à une réseau triphasé et alimentant une machine asynchrone (1) et comportant un circuit intermédiaire à courant continu et un convertisseur de courant à commutation automatique,

c) un calculateur (14, 20 à 25) de la valeur réelle, comportant un premier circuit diviseur (14), aux entrées duquel sont envoyées des grandeurs respectives proportionelles à la valeur du vecteur du flux et au courant actif, calcule, à partir de valeurs réelles du courant statorique et de la tension statorique, la valeur réelle d'une grandeur (W) et l'état de charge, qui correspond, à l'état stationnaire, à la tangente de l'angle de charge ($\varepsilon = \text{arctg } i_{\psi 2}/i_{\psi 1}$),

d) un régulateur (17) de l'état de la charge qui est chargé par l'écart de réglage entre une valeur de consigne ($w^* = i^*_{\psi 2}/\psi^*$) de la grandeur de l'état de charge, dérivée du courant actif de consigne ($i_{\psi 2}^*$) et la valeur réelle (W) de la grandeur de l'état de charge, fournit une grandeur de commande de la fréquence, avec laquelle le convertisseur de courant à commutation automatique est commandé, et

e) la valeur réelle de substitution pour le régulateur (8) de la vitesse de rotation est prélevée, sans l'utilisation d'un dispositif de détection de la vitesse de rotation, sur la sortie du régulateur de la grandeur de l'état de charge pour la grandeur (f) de commande de la fréquence.

5. Dispositif suivant la revendication 4, caractérisé par le fait que le calculateur de la valeur réelle forme des grandeurs respectives, qui sont proportionnelles à la valeur ($\psi$) du vecteur ($\psi$) du flux et au courant actif et sont envoyées aux entrées d'un premier circuit diviseur (4) pour former la valeur réelle de la grandeur de l'état de la charge.

6. Dispositif suivant la revendication 5, caractérisé par le fait qu'au régulateur (14) de l'état de la charge se trouve envoyée, en tant que valeur de consigne, la grandeur de sortie d'un second circuit diviseur (15), à l'entrée du dividende duquel est envoyée la grandeur d'entrée de générateur de fonction (11) et à l'entrée du diviseur duquel est envoyée une grandeur de consigne ($\psi^*$) qui correspond à une valeur prédéterminée du flux.

7. Dispositif suivant la revendication 5 ou 6, caractérisé par le fait qu'une grandeur ($i_{\psi 1}$) proportionnelle à la composante du vecteur du courant statorique, parallèle au vecteur du flux, est également calculée dans le calculateur de valeurs réelles et que cette grandeur est ajoutée, par l'intermédiaire d'un circuit réducteur à la grandeur ($\psi$) proportionnelle à la valeur du flux et présente sur l'entrée du diviseur du premier circuit diviseur (14).

8. Dispositif suivant l'une des revendications 5 à 7, caractérisé par le fait qu'une grandeur ($i_{\psi 1}$) proportionnelle à la composante du vecteur du courant statorique, parallèle au vecteur du flux, est également calculée dans le calculateur (25) de la valeur réelle et que, dans le cas où elle est inférieure à une valeur minimale, cette grandeur est ajoutée, par l'intermédiaire d'un circuit de blocage (46), à la grandeur proportionnelle au vecteur du flux et présente au niveau de l'entrée du diviseur du premier circuit diviseur (14).

9. Dispositif suivant l'une des revendications 5 à 8, caractérisé par le fait que le régulateur de l'état de la charge est constitué par deux régulateurs à action proportionnelle et intégrale (30, 31) branchés en série.

10. Dispositif suivant l'une des revendications 5 à 9, caractérisé par le fait qu'un circuit d'adaptation est branché en aval du régulateur (17) de l'état de la charge et que le circuit d'adaptation contient un noeud combinatoire (32) auquel le grandeur de sortie du régulateur (17) d'état de la charge est appliquée directement (33) au moyen d'un circuit en parallèle, et par l'intermédiaire d'un amplificateur (34) possédant une courbe caractéristique d'amplification dont la croissance est plus que proportionnelle.

11. Dispositif suivant la revendication 10, caractérisé par le fait qu'un circuit de transmission (34a) réalisant une différentiation et un lissage, est branché en aval de l'amplicateur (34).

12. Dispositif suivant l'une des revendications 4 à 11, caractérisé par des moyens de commutation (72 à 75) pour réaliser la transition entre un fonctionnement normal, dans lequel la vitesse de rotation est réglée, et un fonctionnement à basse fréquence, dans lequel la vitesse de rotation est commandée, et qui

a) commutent l'entrée du régulateur de l'état de la charge depuis l'écart de réglage (W—W*) de la grandeur de l'état de la charge sur la différence entre la valeur de consigne (f*) de la vitesse de rotation et la grandeur (f) de commande de la fréquence,

b) ajoutent, à l'entrée du générateur de fonction, une valeur supplémentaire ($i_H$) du courant magnétisant au flux prédéterminé, notamment moyennant une séparation de l'entrée d'introduction pour le courant actif de consigne ($i_{\psi2}$*), et

c) renvoient l'écart de réglage (W, W*) séparé de l'entrée du régulateur de l'état de la charge dans la gamme des bases fréquences, à l'entrée du régulateur de la vitesse de rotation.

## Claims

1. Method for controlling an asynchronous machine fed by a frequency converter, with the following features:

a) a current control quantity ($i_{\psi2}$*), which corresponds to a desired active current, is formed from the deviation between a specified desired value (f*) for rotational speed and an equivalent actual value, without detecting the rotational speed of the rotor;

b) the amplitude of the output current of the frequency converter is controlled corresponding to the amplitude (i*) of a desired stator current formed from the desired active current ($i_{\psi2}$*) and a desired magneitzation current which corresponds to a specified flux ($\psi$*);

c) the actual values of the active current ($i_{\psi2}$) and of the flux amount ($\psi$) are calculated from actual values of stator current and stator voltage, and from these a load condition quantity (W) is formed as a quotient, this load condition quantity corresponding to the tangent of the load angle in steady operation, and

d) the frequency of the output current of the frequency converter is controlled with a frequency control quantity (f), which is formed from the deviation of the actual value (W) and a desired

value (W*=$i_{\psi2}$*/$\psi$*) of the load condition quantity, this desired value being formed from the current control quantity ($i_{\psi2}$*), and

e) the frequency control quantity (f) is used as an equivalent actual value.

2. Method according to claim 1, characterised in that if an upper limit value for the actual value (W) of the load angle is exceeded, or if a lower limit value for the actual value ($i_{\psi1}$) of the magnetization current, which is calculated from the stator current and stator voltage, is not attained, an interference with the actual value of the load condition quantity occurs, in the sense of a lowering of the frequency control quantity.

3. Method according to claim 1 or 2, characterised in that in unstationary conditions, an actual value (W) of the load condition quantity is formed, which corresponds to the quotient of the actual active current ($i_{\psi2}$) and of the flux amount, which has been modified by dynamic superimposition (47) of the actual value ($i_{\psi1}$) of the magnetization current on the flux amount ($\psi$).

4. Arrangement for carrying out the method according to claim 1, with the following features:

a) a rotational speed controller (8) forms a current control quantity ($i_{\psi2}$*), corresponding to a desired active current, from the deviation between a specified desired value (f*) of rotational speed and an equivalent actual value,

b) a function generator calculates the desired value (i*) for the amplitude of the stator current from the desired active current and a desired magnetization current, which corresponds to a specified flux ($\psi$*), wherein via a controller (12) for the amplitude amount, the amplitude controls the line-commutated converter of a frequency converter (3 to 6), which is connected to a three-phase system, supplies an asynchronous machine (1) and has a direct current link and a self-commutated converter,

c) an actual value calculator (14, 20 to 25) with a first dividing element (14), to the inputs of which respective values, which are proportional to the amount of the flux vector and to the active current, are conducted, calculates from actual values of stator current and stator voltage the actual value of a load condition quantity (W), which corresponds to the tangent of the load angle ($\varepsilon$=arc tan $i_{\psi2}$/$i_{\psi1}$) in a steady case,

d) a load condition controller (17), actuated by the deviation between a desired value (W*=$i_{\psi2}$/$\psi$*) of the load condition quantity, derived from the desired active current ($i_{\psi2}$*), and the actual value (W) of the load condition quantity, produces a frequency control quantity, by means of which the self-commutated converter is controlled, and

e) the equivalent actual value for the rotational speed controller (8) is detected without using a rotational speed detector at the output of the load condition quantity controller for the frequency control quantity (f).

5. Arrangement according to claim 4, characterised in that the actual-value calculator produces respective quantities which are proportional to the amount ($\psi$) of the flux vector ($\underline{\psi}$) and

to the active current, wherein these quantities are led to the inputs of a first dividing element (14) in order to produce the actual value for the load condition quantities.

6. Arrangement according to claim 5, characterised in that the output quantity of a second dividing element (15) is led to the load condition controller (14) as a desired value, wherein the input quantity of the frequency generator (11) is led to the dividing end input of the second dividing element and a desired quantity ($\psi^*$), which corresponds to a specified value of the flux amount, is led to the divisor input of the second dividing element.

7. Arrangement according to claim 5 or 6, characterised in that a quantity ($i_{\psi 1}$) is also calculated in the actual calculator, this quantity being proportional to the stator current vector component which is parallel to the flux vector and in that this quantity is added via a feed-back element to the quantity ($\psi$), which is proportional to the flux amount, at the divisor input of the first dividing element (14).

8. Arrangement according to one of claims 5 to 7, characterised in that a quantity ($i_{\psi 1}$) is also calculated in the actual value calculator (25), this quantity being proportional to the stator current vector component which is parallel to the flux vector, and, when a value lies below a minimum value, this quantity is added via a blocking circuit (46) to the quantity, which is proportional to the flux vector, at the divisor input of the first dividing element (14).

9. Arrangement according to one of claims 5 to 8, characterised in that the load condition controller (17) comprises two IP-controllers (30, 31) connected in series.

10. Arrangement according to one of claims 5 to 9, characterised in that an adapting element is connected in series to the load condition controller (17), and in that the adapting element contains an intersection point (32) on which the output quantity of the load condition controller (17) is superimposed directly via a parallel circuit (33) and via an amplifier (34) with an amplifying characteristic line which increases over-proportionally.

11. Arrangement according to claim 10, characterised in that a differentiating and smoothing transfer element (34a) is connected in series with the amplifier (34).

12. Arrangement according to one of claims 4 to 11 characterised by change-over means (72 to 75) for the transition between a normal operation of the rotational field machine controlled by rotational speed and a low frequency operation controlled by rotational speed, which change-over means

a) change over the input of the load condition controller from the deivation (W—W*) of the load condition quantity to the difference between the desired rotational speed value (f*) and the frequency control quantity (f),

b) determine an additional magnetization current value ($i_H$) for the specified flux, at the input of the frequency generator, particularly in the case of separation of the input entrance for the desired active current ($i_{\psi 2}^*$), and

c) lead back the separated deviation (W—W*) in the low frequency region of the input of the load condition controller to the input of the rotational speed controller.

FIG 1

FIG 5

1

FIG 2

FIG 3

FIG 4